# FASCICULE DE BREVET EUROPEEN

(11) **EP 0 669 220 B1**
(45) Date de publication et mention de la délivrance du brevet: **19.11.1997**
(21) Numéro de dépôt: 95400373.7
(22) Date de dépôt: 22.02.1995
(51) Int. Cl.: B60N 2/12

(54) **Dispositif de positionnement longitudinal d'un siège de véhicule**
Vorrichtung zum Längspositionieren eines Fahrzeugsitzes
Device for longitudinally positioning a vehicle seat

(30) Priorité: 25.02.1994 FR 9402210
(43) Date de publication de la demande: 30.08.1995
(73) Titulaire: BERTRAND FAURE EQUIPEMENTS S.A., F-92100 Boulogne (FR)
(72) Inventeur: Baloche, François, F-61100 La Carneille (FR); Taylor, Marc, F-50300 Avranches (FR)
(74) Mandataire: Burbaud, Eric

(56) Documents cités:
- DE-A- 2 233 915
- FR-A- 2 263 122
- FR-A- 2 322 763
- FR-A- 2 391 873
- FR-A- 2 513 195

## Description

La présente invention concerne un dispositif de positionnement longitudinal d'un siège de véhicule.

Plus particulièrement, l'invention concerne un tel dispositif, destiné à un siège comportant une assise montée mobile en translation vers l'avant et vers l'arrière selon une direction dite longitudinale, et un dossier monté sur l'assise et pouvant pivoter entre une position rabattue vers l'avant et une position relevée, où un utilisateur peut s'asseoir sur le siège, ce qui correspond à la position de conduite pour le conducteur.

Lorsqu'on veut accéder à une partie du véhicule située à l'arrière du dossier du siège, et notamment dans le cas d'un siège avant de véhicule à deux ou trois portes, il peut être particulièrement utile, en plus de rabattre le dossier, de faire avancer l'assise du siège pour dégager au maximum ladite partie du véhicule située à l'arrière du dossier du siège.

Dans ce but, le document FR-A-2 513 195 propose un dispositif de positionnement du type désigné ci-dessus, comportant :
- des moyens de réglage pour déplacer longitudinalement l'assise en translation jusqu'à une position choisie, réalisant ainsi un réglage appelé "réglage confort",
- et des moyens de déplacement automatique pour déplacer automatiquement l'assise vers l'avant jusqu'à une position dite de fin de course lorsque le dossier est rabattu et pour déplacer automatiquement l'assise vers l'arrière jusqu'à la position choisie susmentionnée lorsque le dossier est ramené de sa position rabattue à sa position relevée.

Toutefois, pour ramener automatiquement l'assise du siège vers l'arrière jusqu'à la position choisie, c'est-à-dire la position qui a été réglée au préalable, le dispositif divulgué dans le document FR-A-2 513 195 prévoit des moyens électroniques qui sont complexes et coûteux.

La présente invention a notamment pour but de proposer un dispositif du type défini ci-dessus, qui mette en oeuvre des moyens simples, fiables et peu coûteux.

A cet effet, selon l'invention, un dispositif de positionnement longitudinal d'un siège de véhicule du type défini ci-dessus est essentiellement caractérisé en ce que lesdits moyens de déplacement automatique comportent, en outre, un curseur mobile longitudinalement en translation, des moyens de détection pour détecter une position relative prédéterminée, dite position de verrouillage, du curseur par rapport à l'assise, des moyens de verrouillage pour solidariser le curseur par rapport à l'assise lorsque le curseur et l'assise sont dans leur position relative de verrouillage, des moyens d'arrêt pour arrêter l'action des moyens de déplacement automatique dans le cas où ceux-ci déplacent l'assise vers l'arrière et où la position de verrouillage est détectée par les moyens de détection, et des moyens de neutralisation pour neutraliser à la fois l'action des moyens de verrouillage et des moyens d'arrêt lorsque le dossier est dans sa position rabattue.

Ainsi, le curseur permet de mémoriser de façon extrêmement simple la position choisie de l'assise du siège, c'est-à-dire la position qui a été réglée au préalable.

Dans des modes de réalisation préférés de l'invention, on a recours en outre à l'une et/ou à l'autre des dispositions suivantes :
- les moyens de verrouillage comportent une butée qui est solidaire de l'assise et un organe de verrouillage qui est monté pivotant sur l'assise entre une position d'engagement et une position effacée, cet organe de verrouillage étant sollicité par un ressort vers sa position d'engagement et pouvant être déplacé dans sa position effacée par les moyens de neutralisation lorsque le dossier est placé dans sa position rabattue, ledit organe de verrouillage comportant une face d'arrêt dirigée vers l'avant, le curseur étant emprisonné entre la butée et ladite face d'arrêt lorsque ledit curseur et l'assise sont dans leur position relative de verrouillage, le curseur et l'organe de verrouillage comportant respectivement des surfaces adaptées à coopérer ensemble pour déplacer l'organe de verrouillage vers sa position effacée, par effet de came, sans déplacer le curseur, lors du déplacement automatique de l'assise vers l'arrière, de façon que l'assise puisse revenir dans la position de verrouillage par rapport au curseur ;
- le curseur est mobile avec un frottement suffisant pour empêcher le déplacement dudit curseur lors de l'effet de came susmentionné ;
- les moyens de neutralisation comportent un câble qui est monté entre l'organe de verrouillage et le dossier du siège, et qui est mis en tension lorsque le dossier est dans sa position rabattue, pour faire pivoter l'organe de verrouillage dans sa position effacée ;
- les moyens de déplacement automatique comportent un moteur électrique de déplacement automatique et les moyens d'arrêt sont constitués par un commutateur d'arrêt qui est monté en série avec ce moteur électrique, les moyens de détection comportant un levier de détection qui commande le commutateur d'arrêt et qui est monté pivotant sur l'organe de verrouillage, ce levier de détection étant déplaçable entre une position de repos où le commutateur d'arrêt permet l'alimentation du moteur électrique de déplacement automatique et une position de détection où ledit commutateur d'arrêt coupe l'alimentation dudit moteur électrique de déplacement automatique, le levier de détection étant sollicité élastiquement vers sa position de repos, le levier de détection pouvant être déplacé dans sa position de détection par le curseur lorsque le curseur et l'assise sont dans leur position relative de verrouillage et l'organe de verrouillage est dans sa position engagée, et le levier de détection n'étant plus en contact avec le curseur lorsque l'organe de verrouillage est dans sa position effacée, de sorte que ledit levier de détection est alors dans sa position de repos ;
- les moyens de déplacement automatique comportent un commutateur de position rabattue et un commutateur de position relevée, le moteur électrique de déplacement automatique et le commutateur d'arrêt étant connectés en série entre le commutateur de position rabattue et le commutateur de position relevée, et lesdits commutateurs de position rabattue et de position relevée coopérant avec le dossier du siège pour connecter le moteur électrique de déplacement automatique à des moyens d'alimentation électrique en inversant le sens de rotation dudit moteur selon que le dossier est dans sa position rabattue ou dans sa position relevée ;
- le commutateur de position relevée est relié directement à une borne des moyens d'alimentation électrique lorsque le dossier est en position relevée, et ledit commutateur de position relevée est relié à une autre borne des moyens d'alimentation électrique par l'intermédiaire d'un commutateur de fin de course lorsque le dossier est en position rabattue, ce commutateur de fin de course étant ouvert lorsque l'assise du siège est avancée dans sa position de fin de course, et fermé lorsque l'assise du siège n'est pas dans ladite position de fin de course ;
- le dossier du siège est monté rotatif autour d'un axe de rotation, le dispositif comportant une came rotative qui est solidaire du dossier et qui présente un profil en arc de cercle centré sur ledit axe de rotation et s'étendant sur un certain angle, le commutateur de position relevée comportant un organe de commande qui est déplacé élastiquement par l'organe de came lorsque le dossier est dans sa position relevée et qui se trouve alors en contact avec le profil en arc de cercle de cet organe de came, l'angle sur lequel s'étend le profil en arc de cercle étant suffisant pour permettre une certaine plage de réglage angulaire de la position relevée du dossier et pour que l'organe de commande du commutateur de position relevée se trouve en contact avec ledit profil en arc de cercle dans la position relevée du dossier dans toute cette plage de réglage.

D'autres caractéristiques et avantages de l'invention apparaîtront au cours de la description détaillée suivante d'une de ses formes de réalisation, donnée à titre d'exemple non limitatif, en regard des dessins joints.

Sur les dessins :
- la figure 1 est une vue schématique en élévation d'un siège pouvant être équipé du dispositif de réglage selon l'invention,
- la figure 2 est un schéma de principe d'un mode de réalisation du dispositif de positionnement selon l'invention,
- la figure 3 est un schéma électrique du dispositif de la figure 2,
- la figure 4 est une vue en coupe partielle d'une partie du dispositif de positionnement de la figure 2, lorsque le dossier du siège est relevé en position d'utilisation,
- la figure 5 est une vue schématique de la section du curseur de la figure 4 sur son rail de guidage à l'intérieur d'une des glissières de l'assise,
- la figure 6 est une vue de dessus du curseur de la figure 4,
- la figure 7 est une vue similaire à la figure 4 mais non coupée, lorsque le dossier est dans sa position rabattue et l'assise avancée jusqu'à sa position de fin de course, et
- la figure 8 est une vue en coupe qui représente les commutateurs de position du dossier du siège et l'organe de came qui les commande, dans le mode de réalisation de la figure 2.

Sur les différentes figures, les mêmes références désignent des éléments identiques.

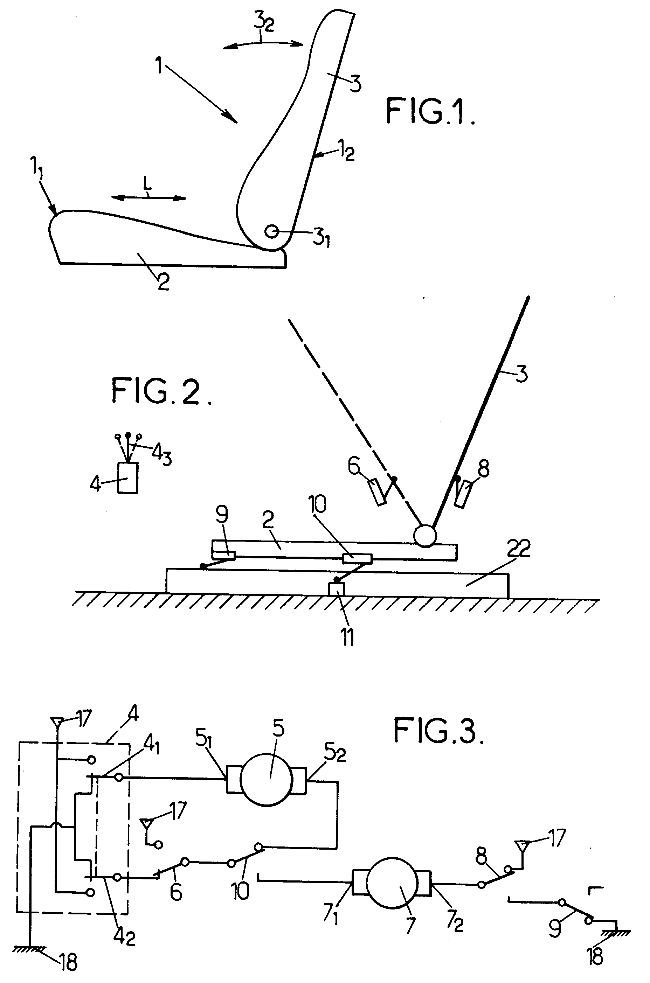

Comme représenté schématiquement sur la figure 1, l'invention s'applique à un siège de véhicule 1, notamment un siège avant pour un véhicule à deux ou trois portes, c'est-à-dire pour un véhicule dans lequel il est nécessaire de basculer au moins un des sièges avant pour accéder aux sièges arrière.

Le siège 1 comporte une assise 2 qui définit une partie avant 1₁ du siège et un dossier 3 qui définit une partie arrière 1₂ du siège. L'assise 2 est déplaçable en translation par rapport à une embase comportant des rails longitudinaux 22, dans une direction longitudinale L, vers l'avant et vers l'arrière du siège.

Le dossier 3 est monté sur l'assise 2 de façon à pouvoir pivoter autour d'un axe 3₁, comme représenté par la double flèche 3₂ sur la figure 1, entre une position rabattue vers l'avant et une position relevée où un utilisateur peut s'asseoir sur le siège, ce qui correspond à la position de conduite pour le conducteur. De préférence, la position relevée du dossier est réglable en inclinaison.

Les figures 2 et 3 représentent schématiquement un mode de réalisation d'un dispositif de positionnement longitudinal selon la présente invention, qui permet de positionner longitudinalement l'assise 2 du siège de la figure 1.

Comme représenté sur la figure 3, ce dispositif comporte deux moteurs électriques à courant continu, savoir un moteur électrique de réglage 5 qui peut déplacer longitudinalement l'assise à petite vitesse, et un moteur électrique de déplacement automatique 7 qui peut déplacer longitudinalement l'assise à grande vitesse.

Les liaisons mécaniques entre les moteurs 5 et 7 et d'une part l'embase, d'autre part l'assise, sont classiques et ne seront pas décrites ici.

Le moteur de réglage 5 est connecté entre deux bornes 17 et 18 d'une source de courant continu, en particulier un accumulateur. Généralement, la borne 17 est la borne positive de l'accumulateur et la borne 18 est la borne négative de l'accumulateur, cette borne 18 étant reliée à la masse du véhicule. Ces dispositions ne sont toutefois pas obligatoires, et bien que cela soit moins préféré, on pourrait éventuellement imaginer que la borne 18 ne soit pas reliée à la masse du véhicule et/ou que la borne 17 représente le pôle négatif de l'accumulateur et la borne 18 son pôle positif.

Le moteur électrique de réglage 5 comporte deux bornes 5₁, 5₂. La première borne 5₁ est connectée à un premier commutateur de commande 4₁, tandis que la deuxième borne 5₂ est connectée à un deuxième commutateur de commande 4₂, via les commutateurs 6 et 10.

Les deux commutateurs de commande 4₁ et 4₂ sont, dans l'exemple représenté, liés mécaniquement l'un à l'autre et intégrés dans un même boîtier de commande 4.

Le boîtier de commande 4 peut comporter un bouton poussoir unique 4₃ (figure 2) qui commande simultanément les deux commutateurs de commande 4₁, 4₂ et qui est déplaçable entre trois positions, savoir une position de repos, une position de marche avant et une position de marche arrière.

Lorsque le bouton poussoir 4₃ est dans sa position de repos, chacun des commutateurs de commande 4₁, 4₂, est dans un état de repos, et connecte la borne du moteur électrique de réglage à laquelle il est relié à la deuxième borne 18 de l'accumulateur. Ainsi, dans cette position, le moteur électrique de réglage 5 ne fonctionne pas.

Lorsque le bouton poussoir 4₃ est dans sa position de marche arrière, le premier commutateur de commande 4₁ est placé dans un état de travail et connecte la borne 5₁ du moteur à la première borne 17 de l'accumulateur, tandis que le deuxième commutateur 4₂, malgré un déplacement, reste dans son état de repos et continue à connecter la deuxième borne 5₂ du moteur électrique de réglage à la deuxième borne 18 de l'accumulateur. Par conséquent, le moteur électrique de réglage 5 est mis en marche et tourne dans un sens prédéterminé pour faire reculer l'assise 2 du siège par rapport à l'embase 22. Lorsque l'utilisateur relâche le bouton poussoir 4₃, ce bouton poussoir revient élastiquement dans sa position de repos, de sorte que les deux commutateurs de commande 4₁ et 4₂ sont également ramenés dans leur position de repos, ce qui arrête le moteur électrique de réglage 5.

De même, lorsque le bouton poussoir 4₃ est placé dans sa position de marche avant, le deuxième commutateur de commande 4₂ est placé dans un état de travail, où il connecte la deuxième borne 5₂ du moteur électrique de réglage à la première borne 17 de l'accumulateur, tandis que le premier commutateur de commande 4₁ reste à l'état de repos malgré son déplacement, de sorte que la première borne 5₁ du moteur électrique de réglage reste connectée par le premier commutateur de commande 4₁ à la deuxième borne 18 de l'accumulateur. Ainsi, le moteur électrique de réglage tourne en sens inverse par rapport au cas précédent, de façon à entraîner l'assise du siège vers l'avant. Comme précédemment, lorsque l'utilisateur relâche le poussoir 4₃ les deux commutateurs de commande 4₁ et 4₂ reviennent dans leur position de repos, de sorte que le moteur électrique de réglage 5 est arrêté.

Eventuellement, les deux commutateurs de commande 4₁ et 4₂ pourraient ne pas être liés mécaniquement l'un à l'autre et pourraient alors être commandés indépendamment l'un de l'autre, chacun par un poussoir à deux positions : une position de repos dans laquelle le commutateur de commande connecte la borne du moteur à laquelle il est relié, à la deuxième borne 18 de l'accumulateur, et une position de travail où le commutateur de commande connecte la borne du moteur 5 à laquelle il est relié, à la première borne 17 de l'accumulateur.

Selon l'invention, le dispositif de positionnement de siège comporte en outre un commutateur de position rabattue 6, un commutateur de position relevée 8, un commutateur de fin de course 9 et un commutateur d'arrêt 10.

Le commutateur de position rabattue 6 et le commutateur d'arrêt 10 sont connectés en série entre le deuxième commutateur de commande 4₂ et la deuxième borne 5₂ du moteur électrique de réglage 5, le commutateur de position rabattue 6 étant disposé entre le commutateur d'arrêt 10 et le commutateur de commande 4₂. Eventuellement les commutateurs 6 et 10 pourraient être connectés en série entre le premier commutateur de commande 4₁ et la première borne 5₁ du moteur 5.

Le commutateur de position rabattue 6 peut être placé soit dans un état de repos, où il connecte le commutateur d'arrêt 10 au deuxième commutateur de commande 4₂, soit dans un état de travail, où il connecte ledit commutateur d'arrêt 10 à la première borne 17 de l'accumulateur. Le commutateur de position rabattue coopère avec le dossier 3 du siège pour être placé dans son état de travail lorsque le dossier 3 est dans sa position rabattue, et dans son état de repos lorsque le dossier n'est pas dans sa position rabattue.

Le commutateur d'arrêt 10 peut être placé soit dans un état de travail, où il connecte le commutateur de position rabattue 6 à la deuxième borne 5₂ du moteur électrique de réglage 5, soit dans un état de repos, où il connecte le commutateur de position rabattue 6 à une première borne 7₁ du moteur électrique de déplacement automatique 7.

Par des moyens qui seront décrits ci-après, le commutateur d'arrêt 10 est toujours placé dans son état de repos lorsque le dossier 3 du siège est dans sa position rabattue. Lorsque ce dossier est dans sa position relevée, le commutateur d'arrêt 10 coopère avec un curseur 11, mobile en translation par rapport à l'embase dans la direction longitudinale L, pour être placé dans son état de travail lorsque l'assise et le curseur sont dans une position relative prédéterminée, dite position de verrouillage, et pour être placé dans son état de repos lorsque l'assise et le curseur ne sont pas dans leur position relative dite de verrouillage.

Le moteur électrique de déplacement automatique 7 comporte une deuxième borne 7₂ qui est connectée au commutateur de position relevée 8. Le commutateur 8 peut être placé soit dans un état de travail, où il connecte ladite deuxième borne 7₂ à la première borne 17 de l'accumulateur, soit dans un état de repos, où il connecte ladite deuxième borne 7₂ à la deuxième borne 18 de l'accumulateur, par l'intermédiaire de la commutation de fin de course 9.

Le commutateur de position relevée 8 coopère avec le dossier 3 du siège, d'une façon qui sera décrite ci-après, pour être placé dans son état de travail lorsque le dossier est dans sa position relevée, et dans son état de repos lorsque le dossier n'est pas dans sa position relevée.

D'autre part, le commutateur de fin de course 9 est en général fermé, sauf lorsque l'assise 2 du siège est avancée au maximum par rapport à l'embase, dans une position prédéterminée dite position de fin de course, auquel cas le commutateur de fin de course 9 est ouvert.

Le dispositif fonctionne comme suit. Lorsque le dossier 3 est en position relevée, le circuit électrique est dans la situation représentée sur la figure 3, et les commutateurs 6 et 10 connectent la deuxième borne 5₂ du moteur électrique de réglage au deuxième commutateur de commande 4₂. Dans ce cas, la position de l'assise du siège peut être réglée dans une position choisie, en actionnant le bouton poussoir 4₃ comme décrit précédemment.

Au cours de ce mouvement, le curseur 11 est solidarisé à l'assise 2 par des moyens qui seront décrits ci-après, dans la position relative dite de verrouillage du curseur par rapport à l'assise. Le curseur 11 se déplace donc alors avec l'assise.

Lorsqu'un utilisateur bascule le dossier 3 du siège dans sa position rabattue, le commutateur de position relevée 8 passe à l'état repos, puis le commutateur d'arrêt 10 passe à l'état repos, et enfin le commutateur de position rabattue 6 passe à l'état de travail. Par conséquent, la première borne 7₁ du moteur électrique de déplacement automatique 7 est connectée à la première borne 17 de l'accumulateur par l'intermédiaire du commutateur de position rabattue 6 et du commutateur d'arrêt 10, et la deuxième borne 7₂ du moteur électrique de déplacement automatique est connecté à la deuxième borne 18 de l'accumulateur par l'intermédiaire du commutateur de position relevée 8 et de l'interrupteur de fin de course 9. Ainsi, le moteur électrique de déplacement automatique 7 est mis en marche dans un sens qui permet l'avance rapide de l'assise 2 par rapport à l'embase.

Lorsque l'assise arrive dans sa position de fin de course, le commutateur 9 de fin de course s'ouvre, de sorte que le moteur électrique de déplacement automatique s'arrête.

Lorsque le siège est dans cette position de fin de course, avec son dossier rabattu, il est facile à un utilisateur d'accéder à l'arrière du siège, par exemple pour s'asseoir aux places arrières du véhicule.

A partir de cette position , lorsque l'utilisateur remet le dossier 3 dans sa position relevée, le commutateur de position rabattue 6 revient à l'état repos, le commutateur de position relevée 8 revient à l'état de travail, et le commutateur d'arrêt 10 est toujours à l'état repos. D'autre part, le bouton poussoir 4₃ est à ce moment normalement dans sa position de repos.

Par conséquent, la première borne 7₁ du moteur électrique de déplacement automatique est connectée à la deuxième borne 18 de l'accumulateur par l'intermédiaire du commutateur d'arrêt 10, du commutateur de position rabattue 6 et du deuxième commutateur de commande 4₂, tandis que la deuxième borne 7₂ du moteur électrique de déplacement automatique est connectée à la première borne 17 de l'accumulateur par l'intermédiaire du commutateur de position relevée 8. Ainsi, le moteur électrique de déplacement automatique 7 est mis en marche dans le sens inverse du cas précédent, c'est-à-dire de façon à déplacer l'assise 2 vers l'arrière par rapport à l'embase.

Lorsque l'assise 2 arrive dans sa position choisie, c'est-à-dire dans la position qui avait été réglée au préalable par l'utilisateur, le commutateur d'arrêt 10 revient dans son état de travail, de sorte que le moteur électrique de déplacement automatique 7 est arrêté. A ce moment, le curseur et l'assise sont dans leur position relative dite de verrouillage, de sorte que le curseur est à nouveau solidarisé avec l'assise.

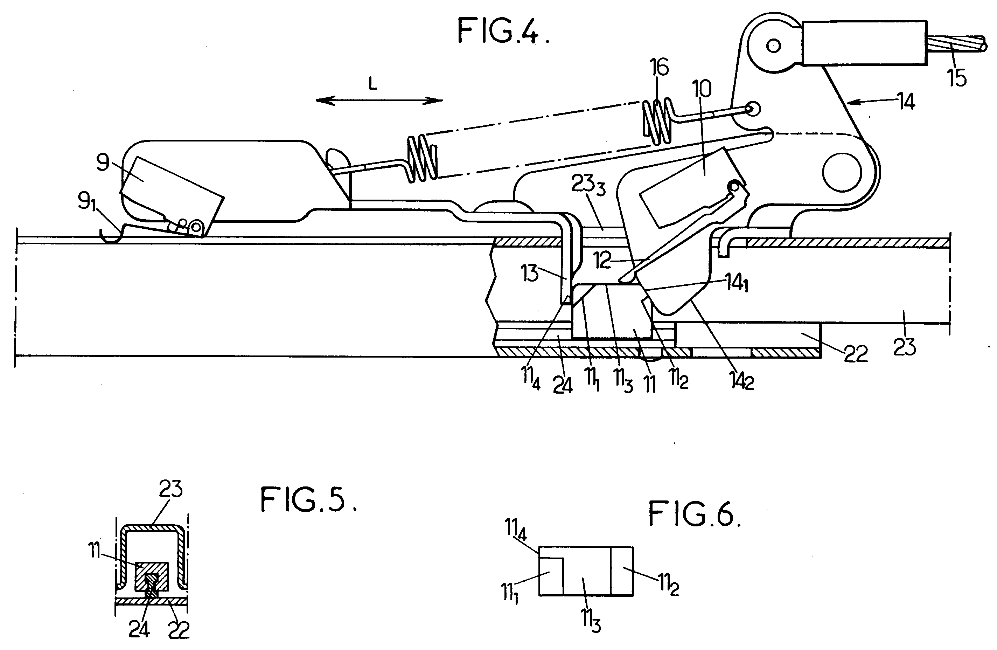

Un mode de réalisation particulièrement avantageux de l'invention est décrit sur les figures 4 à 8. Dans ce mode de réalisation, comme représenté sur la figure 5, l'assise est montée sur des glissières longitudinales constituées par, d'une part des rails inférieurs 22 qui forment l'embase, et d'autre part des rails supérieurs 23 solidaires de l'assise 2.

En outre, un rail 24 est fixé sur la base du rail inférieur 22 d'une des glissières et à l'intérieur de cette glissière. Le curseur 11 est monté coulissant avec frottement le long de ce rail 24, et il est entièrement compris à l'intérieur de la glissière.

Comme représenté sur la figure 4, le rail supérieur 23 de la glissière qui inclut le curseur 11 comporte le commutateur d'arrêt 10 et le commutateur de fin de course 9 décrits précédemment, ainsi qu'un mécanisme de verrouillage qui permet de solidariser le curseur 11 par rapport à l'assise du siège.

Ce mécanisme de verrouillage comporte un organe de verrouillage 14, qui est monté pivotant autour d'un axe horizontal perpendiculaire à la direction longitudinale L. Cet organe de verrouillage 14 peut ainsi être déplacé par rotation entre une position dite d'engagement et une position dite effacée.

Dans la position dite d'engagement, une partie de l'organe de verrouillage 14 pénètre à l'intérieur de la glissière par une ouverture 23₃ ménagée dans le rail supérieur 23, de sorte que l'organe de verrouillage 14 interfère avec le curseur 11. Dans la position effacée, au contraire, le levier de verrouillage 14 est suffisamment relevé pour ne plus interférer avec le curseur 11.

L'organe de verrouillage 14 est sollicité élastiquement vers sa position d'engagement par un ressort 16, et il est en outre relié à une extrémité d'un câble 15 dont l'autre extrémité est solidaire de l'armature du dossier 3 du siège. Ce câble 15 peut être mis en traction et agir sur ledit organe de verrouillage 14 pour le placer dans sa position effacée lorsque le dossier 3 est placé dans sa position rabattue, comme expliqué ci-après.

Comme représenté sur les figures 4 et 6, le curseur 11 présente un profil qui comprend une face supérieure horizontale 11₃ entourée par deux rampes inclinées 11₁, 11₂, respectivement vers l'avant et vers l'arrière. Toutefois, la rampe 11₁ dirigée vers l'avant ne représente pas toute la largeur du curseur, une partie de la largeur du curseur étant constituée, vers l'avant de ce curseur, par une face verticale 11₄.

Lorsque le curseur et l'assise sont dans leur position relative de verrouillage et l'organe de verrouillage dans sa position engagée, comme représenté sur la figure 4, le curseur 11 est emprisonné entre d'une part un doigt de butée 13 qui est solidaire du rail supérieur 23, et d'autre part une face d'arrêt 14₁ de l'organe de verrouillage 14. Dans cette position, le doigt de butée 13, qui fait saillie verticalement à l'intérieur de la glissière par l'ouverture 23₃ susmentionnée, est disposé vers l'avant du curseur 11 et bute contre la face verticale 11₄ du curseur. Eventuellement, cette face verticale 11₄ pourrait être supprimée, toute la largeur du curseur 11 étant alors occupée par la rampe 11₁, et le doigt de butée 13 butant contre une autre partie du curseur 11, par exemple la rampe 11₁.

D'autre part, dans cette même position de verrouillage, la face d'arrêt 14₁ de l'organe de verrouillage bute contre la rampe arrière 11₂ du curseur, et ladite face d'arrêt 14₁ est suffisamment peu inclinée par rapport à la verticale pour que cette butée n'ait pas tendance à soulever l'organe de verrouillage 14 lorsque ledit organe de verrouillage entraîne le curseur 11 au cours d'un mouvement de réglage de l'assise.

Sur le levier de verrouillage 14 est monté le commutateur d'arrêt 10, ainsi qu'un levier de détection 12 qui est rotatif parallèlement à l'organe de verrouillage entre une position dite de détection et une position dite de repos, le levier de détection 12 étant sollicité élastiquement vers sa position de repos.

Le levier de détection 12 coopère avec le commutateur d'arrêt 10 pour placer le commutateur d'arrêt dans son état de repos lorsque ledit levier de détection est dans sa position de repos et pour placer le commutateur d'arrêt dans son état de travail lorsque ledit levier de détection est dans sa position de détection.

Le levier de détection s'étend vers l'avant jusqu'à une extrémité libre qui est adaptée à interférer avec le curseur 11 et qui s'appuie sur la face supérieure 11₃ du curseur lorsque l'organe de verrouillage 14 est dans sa position d'engagement et le curseur 11 emprisonné entre la butée 13 et l'organe de verrouillage 14. Ainsi, dans cette position, le levier de détection 12 est dans sa position de détection, et le commutateur d'arrêt 10 est dans son état de travail.

D'autre part, le commutateur de fin de course 9 est également fixé sur le rail supérieur 23 de la glissière. Ce commutateur est commandé par un levier 9₁ rotatif, s'étendant vers l'avant jusqu'à une extrémité libre qui glisse sur une portion du rail inférieur 22. Le levier 9₁ est sollicité élastiquement de façon que son extrémité libre soit appliquée contre ledit rail inférieur 22, et il commande le commutateur 9 de façon que celui-ci soit fermé tant que l'extrémité libre dudit levier glisse sur ledit rail inférieur.

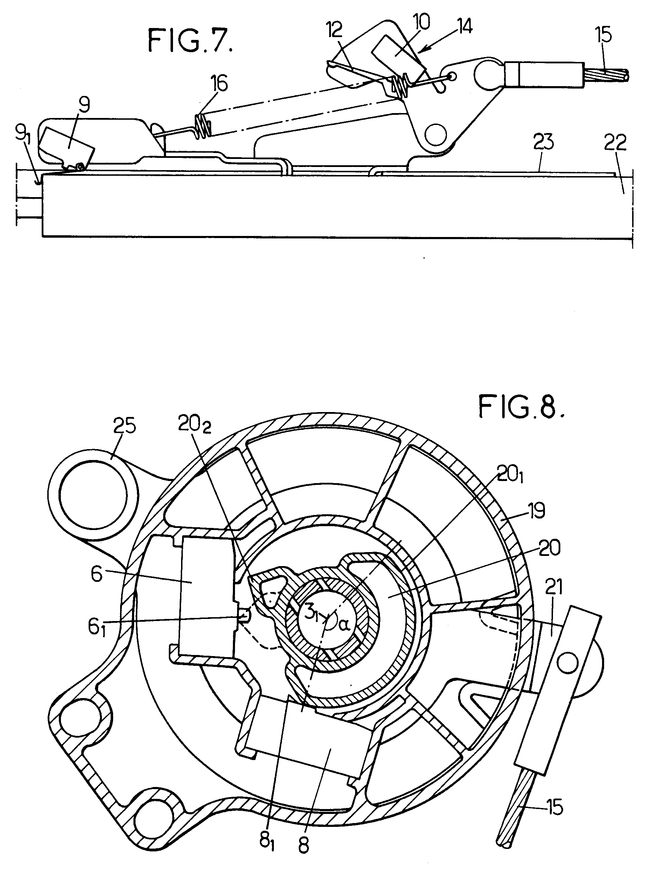

Lorsqu'un utilisateur bascule le dossier 3 du siège en position rabattue, le câble 15 est mis en traction et fait pivoter l'organe de verrouillage 14 dans sa position effacée, comme représenté sur la figure 7. Comme expliqué précédemment, le moteur électrique de déplacement automatique 7 déplace alors l'assise 2 vers l'avant. Du fait que l'organe de verrouillage 14 est dans sa position effacée, le curseur 11 n'est pas entraîné avec l'assise au cours de ce mouvement.

Lorsque l'extrémité libre du levier 9₁ du commutateur de fin de course arrive à l'extrémité avant du rail inférieur 22, cette extrémité libre peut se déplacer vers le bas puisqu'elle n'est plus en appui contre le rail inférieur. Ce mouvement de pivotement du levier 9₁ provoque l'ouverture du commutateur de fin de course 9, ce qui arrête le moteur électrique de déplacement automatique 7.

A partir de cette position de fin de course, lorsque l'utilisateur remet le dossier 3 du siège en position relevée, l'assise du siège est à nouveau entraînée vers l'arrière, comme expliqué précédemment, et l'organe de verrouillage 14 est remis dans sa position d'engagement.

L'organe de verrouillage 14 comporte, vers l'arrière, une surface de came 14₂ qui vient glisser sur la rampe avant 11₁ du curseur 11 à la fin de mouvement de recul de l'assise, ce qui provoque un soulèvement de la partie de l'organe de verrouillage 14 qui fait saillie à l'intérieur du rail supérieur 23, contre la force du ressort 16.

La partie de l'organe de verrouillage 14 qui fait saillie à l'intérieur de la glissière glisse ensuite sur la face supérieure 11₃ du curseur, puis l'organe de verrouillage 14 reprend sa position d'engagement, sous l'action du ressort 16, lorsque l'assise et le curseur sont dans leur position relative dite de verrouillage. Le levier de détection 12 s'appuie alors sur la face supérieure 11₃ du curseur, ce qui place ledit levier de détection dans sa position dite de détection, de sorte que le commutateur d'arrêt 10 est alors placé dans son état de travail et arrête le moteur de déplacement automatique 7.

La surface de came 14₂ et la rampe 11₁ sont suffisamment inclinées par rapport à la verticale, et les frottements entre le curseur 11 et le rail 24 sont suffisamment importants pour que le curseur 11 ne se déplace pas lors du soulèvement de l'organe de verrouillage 14.

Eventuellement, bien que cela ne soit pas préféré, il pourrait être possible de supprimer soit la rampe avant 11₁ du curseur, soit la surface de came 14₂ de l'organe de verrouillage, et il pourrait aussi être possible de maintenir en place le curseur 11 par des moyens de verrouillage, notamment électromécaniques, tant que le commutateur d'arrêt 10 se trouve dans sa position de repos.

Comme représenté sur la figure 8, dans le mode de réalisation particulier décrit ici, le dispositif selon l'invention comporte en outre une came rotative 20 qui est centrée sur l'axe de rotation 3₁ du dossier et qui est solidarisé à l'armature de ce dossier au moyen d'une pièce de fixation 25. Par ailleurs, la came rotative 20 comporte un bras 21 qui est fixé à une extrémité du câble 15, pour tirer sur ce câble et ainsi mettre l'organe de verrouillage 14 en position effacée lorsque le dossier est placé en position rabattue.

La came rotative 20 comporte un profil en arc de cercle 20₁ qui s'étend sur un certain angle α et qui est centré sur l'axe de rotation 3₁. De plus, la came rotative 20 comporte également une partie saillante 20₂, qui fait saillie radialement vers l'extérieur et qui est séparée du profil en arc de cercle 20₁ par deux zones de plus faible rayon.

Cette came rotative 20 coopère avec les commutateurs de position rabattue 6 et de position relevée 8, qui sont montés sur un support 19 solidaire de l'assise 2 du siège. Chacun des commutateurs 6 et 8 comporte un organe d'actionnement, respectivement 6₁, 8₁, qui est sollicité élastiquement radialement vers l'axe de rotation 3₁, ces organes d'actionnement étant adaptés à placer leur commutateur respectif dans l'état repos lorsqu'ils se trouvent eux-mêmes dans une position de repos où ils font saillie au maximum radialement vers l'axe de rotation 3₁, et dans l'état de travail lorsqu'ils sont déplacés radialement vers l'extérieur.

Lorsque le dossier du siège est dans sa position relevée, le profil circulaire 20₁ de la came rotative appuie sur l'organe d'actionnement 8₁ du commutateur de position relevée, tandis que l'organe d'actionnement 6₁ du commutateur de position rabattue se trouve dans sa position de repos. Le commutateur de position relevée 8 est donc à l'état de travail, tandis que le commutateur de position rabattue 6 est à l'état de repos. Du fait que le profil en arc de cercle 20₁ s'étend sur un certain angle α, il est possible de régler l'inclinaison du siège dans une plage angulaire d'amplitude α tout en garantissant que le commutateur de position relevée 8 se trouve bien à l'état actif lorsque le dossier du siège est dans sa position relevée.

Lorsque le dossier du siège est dans sa position rabattue, l'organe d'actionnement 8₁ n'est plus en appui contre le profil en arc de cercle 20₁, de sorte qu'il revient dans sa position de repos, et la partie saillante 20₂ de la came rotative est dans la position représentée en pointillés sur la figure 8 et vient appuyer sur l'organe d'actionnement 6₁ du commutateur de position rabattue. Par conséquent, le commutateur de position relevée 8 se trouve alors à l'état repos, tandis que le commutateur de position rabattue 6 se trouve à l'état de travail.

## Revendications

1. Dispositif de positionnement longitudinal d'un siège (1) de véhicule, ce siège comportant une assise (2) montée mobile en translation vers l'avant et vers l'arrière selon une direction (L) dite longitudinale, et un dossier monté sur l'assise et pouvant pivoter entre une position rabattue vers l'avant et une position relevée, où un utilisateur peut s'asseoir sur le siège, ce dispositif de positionnement comportant :
- des moyens de réglage (4, 5) pour déplacer longitudinalement l'assise (2) en translation jusqu'à une position choisie,
- et des moyens de déplacement automatique (6, 7, 8, 9, 10) pour déplacer automatiquement l'assise (2) vers l'avant jusqu'à une position dite de fin de course lorsque le dossier (3) est rabattu, et pour déplacer automatiquement l'assise vers l'arrière jusqu'à la position choisie susmentionnée lorsque le dossier est ramené de sa position rabattue à sa position relevée,
ce dispositif étant caractérisé en ce que lesdits moyens de déplacement automatique comportent, en outre, un curseur (11) mobile longitudinalement en translation par rapport à l'embase, des moyens de détection (12) pour détecter une position relative prédéterminée, dite position de verrouillage, du curseur par rapport à l'assise, des moyens de verrouillage (13, 14) pour solidariser le curseur par rapport à l'assise lorsque le curseur et l'assise sont dans leur position relative de verrouillage, des moyens d'arrêt (10) pour arrêter l'action des moyens de déplacement automatique dans le cas où ceux-ci déplacent l'assise vers l'arrière et où la position susmentionnée de verrouillage est détectée par les moyens de détection (12), et des moyens de neutralisation (15) pour neutraliser à la fois l'action des moyens de verrouillage (13, 14) et des moyens d'arrêt (10) lorsque le dossier (3) est dans sa position rabattue.

2. Dispositif selon la revendication 1, dans lequel les moyens de verrouillage (13, 14) comportent une butée (13) qui est solidaire de l'assise (2) et un organe de verrouillage (14) qui est monté pivotant sur l'assise entre une position d'engagement et une position effacée, cet organe de verrouillage étant sollicité par un ressort (16) vers sa position d'engagement et pouvant être déplacé dans sa position effacée par les moyens de neutralisation (15) lorsque le dossier est placé dans sa position rabattue, ledit organe de verrouillage comportant une face d'arrêt (14₁) dirigée vers l'avant, le curseur (11) étant emprisonné entre la butée (13) et ladite face d'arrêt lorsque ledit curseur et l'assise sont dans leur position relative de verrouillage, le curseur (11) et l'organe de verrouillage (14) comportant respectivement des surfaces (11₁, 14₂) adaptées à coopérer ensemble pour déplacer l'organe de verrouillage (14) vers sa position effacée, par effet de came, sans déplacer le curseur (11), lors du déplacement automatique de l'assise vers l'arrière, de façon que l'assise et le curseur puissent revenir dans la position de verrouillage par rapport au curseur.

3. Dispositif selon la revendication 2, caractérisé en ce que le curseur est mobile avec un frottement suffisant pour empêcher le déplacement dudit curseur lors de l'effet de came susmentionné.

4. Dispositif selon l'une quelconque des revendications 2 et 3, dans lequel les moyens de neutralisation (15) comportent un câble qui est monté entre l'organe de verrouillage (14) et le dossier (3) du siège, et qui est mis en tension lorsque le dossier est dans sa position rabattue, pour faire pivoter l'organe de verrouillage dans sa position effacée.

5. Dispositif selon l'une quelconque des revendications 2 à 4, dans lequel les moyens de déplacement automatique (6-10) comportent un moteur électrique de déplacement automatique (7) et dans lequel les moyens d'arrêt sont constitués par un commutateur d'arrêt (10) qui est monté en série avec ce moteur électrique, les moyens de détection comportant un levier de détection (12) qui commande le commutateur d'arrêt (10) et qui est monté pivotant sur l'organe de verrouillage (14), ce levier de détection étant déplaçable entre une position de repos où le commutateur d'arrêt permet l'alimentation du moteur électrique (7) de déplacement automatique et une position de détection où ledit commutateur d'arrêt coupe l'alimentation dudit moteur électrique de déplacement automatique, le levier de détection étant sollicité élastiquement vers sa position de repos, le levier de détection pouvant être déplacé dans sa position de détection par le curseur (11) lorsque le curseur et l'assise sont dans leur position relative de verrouillage et l'organe de verrouillage (14) est dans sa position engagée, et le levier de détection (12) n'étant plus en contact avec le curseur (11) lorsque l'organe de verrouillage (14) est dans sa position effacée, de sorte que ledit levier de détection est alors dans sa position de repos.

6. Dispositif selon la revendication 5, dans lequel les moyens de déplacement automatique comportent un commutateur de position rabattue (6) et un commutateur de position relevée (8), le moteur électrique (7) de déplacement automatique et le commutateur d'arrêt (10) étant connectés en série entre le commutateur de position rabattue et le commutateur de position relevée, et lesdits commutateurs de position rabattue et de position relevée coopérant avec le dossier (3) du siège pour connecter le moteur électrique (7) de déplacement automatique à des moyens d'alimentation électrique (17, 18) en inversant le sens de rotation dudit moteur selon que le dossier est dans sa position rabattue ou dans sa position relevée.

7. Dispositif selon la revendication 6, dans lequel le commutateur de position relevée (8) est relié directement à une borne (17) des moyens d'alimentation électrique lorsque le dossier est en position relevée, et ledit commutateur de position relevée est relié à une autre borne (18) des moyens d'alimentation électrique par l'intermédiaire d'un commutateur de fin de course (9) lorsque le dossier est en position rabattue, ce commutateur de fin de course étant ouvert lorsque l'assise du siège est avancée dans sa position de fin de course, et fermé lorsque l'assise du siège n'est pas dans ladite position de fin de course.

8. Dispositif selon l'une quelconque des revendications 6 et 7, dans lequel le dossier (3) du siège est monté rotatif autour d'un axe de rotation (3₁), le dispositif comportant une came rotative (20) qui est solidaire du dossier (3) et qui présente un profil en arc de cercle (20₁) centré sur ledit axe de rotation et s'étendant sur un certain angle (α), le commutateur de position relevée (8) comportant un organe de commande (8₁) qui est déplacé élastiquement par l'organe de came (20) lorsque le dossier est dans sa position relevée, et qui se trouve alors en contact avec le profil en arc de cercle (20₁) de cet organe de came, l'angle (α) sur lequel s'étend le profil en arc de cercle (20₁) étant suffisant pour permettre une certaine plage de réglage angulaire de la position relevée du dossier et pour que l'organe de commande (8₁) du commutateur de position relevée se trouve en contact avec ledit profil en arc de cercle dans la position relevée du dossier dans toute cette plage de réglage.

9. Dispositif selon l'une quelconque des revendications précédentes, équipant un siège avant de véhicule à deux ou trois portes.

## Claims

1. Device for longitudinal positioning of a vehicle seat (1), this seat including a seat part (2) mounted so that it can move in terms of translation forwards and backwards in a direction (L) called a longitudinal direction, and a backrest mounted on the seat part and able to pivot between a folded-down forwards position and an upright position, in which a user can sit down on the seat, this positioning device including:
- adjustment means (4, 5) for longitudinally displacing the seat part (2) in terms of translation as far as a chosen position,
- and automatic-displacement means (6, 7, 8, 9, 10) for automatically displacing the seat part (2) forwards as far as a position known as the end-of-travel position when the backrest (3) is folded down, and for automatically displacing the seat part backwards as far as the abovementioned chosen position when the backrest is returned from its folded-down position to its upright position,
this device being characterized in that said automatic-displacement means further include a slider (11) which can move longitudinally in terms of translation relative to the base, detection means (12) for detecting a predetermined relative position, known as the locking position, of the slider relative to the seat part, locking means (13, 14) for securing the slider relative to the seat part when the slider and the seat part are in their relative locking position, stopping means (10) for stopping the action of the automatic-displacement means in the case where these are displacing the seat part backwards and where the abovementioned locking position is detected by the detection means (12), and neutralizing means (15) for neutralizing both the action of the locking means (13, 14) and of the stopping means (10) when the backrest (3) is in its folded-down position.

2. Device according to Claim 1, in which the locking means (13, 14) include a limit stop (13) which is secured to the seat part (2) and a locking member (14) which is mounted so that it can pivot on the seat part between an engagement position and a non-obstructing position, this locking member being urged by a spring (16) towards its engagement position and being capable of being displaced into its non-obstructing position by the neutralizing means (15) when the backrest is placed in its folded-down position, the said locking member including a stopping face (14₁) pointing forwards, the slider (11) being trapped between the limit stop (13) and the said stopping face when the said slider and the seat part are in their relative locking position, the slider (11) and the locking member (14) respectively including surfaces (11₁, 14₂) designed to interact with each other in order to displace the locking member (14) towards its non-obstructing position, through a cam effect, without displacing the slider (11), when the seat part is being displaced automatically backwards, so that the seat part and the slider can come back into the locking position relative to the slider.

3. Device according to Claim 2, characterized in that the slider can move with sufficient friction to prevent the said slider from being displaced during the abovementioned cam effect.

4. Device according to either one of Claims 2 and 3, in which the neutralizing means (15) include a cable which is mounted between the locking member (14) and the backrest (3) of the seat, and which is tensioned when the backrest is in its folded-down position, in order to cause the locking member to pivot into its non-obstructing position.

5. Device according to any one of Claims 2 to 4, in which the automatic-displacement means (6-10) include an automatic-displacement electric motor (7), and in which the stopping means consist of a stop switch (10) which is mounted in series with this electric motor, the detection means including a detection lever (12) which operates the stop switch (10) and which is mounted so as to pivot on the locking member (14), it being possible for this detection lever to be displaced between a position of rest in which the stop switch allows the automatic-displacement electric motor (7) to be powered and a detection position in which the said stop switch cuts off the power supply of the said automatic-displacement electric motor, the detection lever being urged elastically towards its position of rest, it being possible for the detection lever to be displaced into its detection position by the slider (11) when the slider and the seat part are in their relative locking position and the locking member (14) is in its engaged position, and the detection lever (12) no longer being in contact with the slider (11) when the locking member (14) is in its non-obstructing position, So that the said detection lever is then in its position of rest.

6. Device according to Claim 5, in which the automatic-displacement means include a folded-down-position switch (6) and an upright-position switch (8), the automatic-displacement electric motor (7) and the stop switch (10) being connected in series between the folded-down-position switch and the upright-position switch, and the said folded-down-position and upright-position switches interacting with the backrest (3) of the seat in order to connect the automatic-displacement electric motor (7) to electrical power supply means (17, 18), reversing the direction of rotation of the said motor depending on whether the backrest is in its folded-down position or in its upright position.

7. Device according to Claim 6, in which the upright-position switch (8) is linked directly to a terminal (17) of the electrical power supply means when the backrest is in the upright position, and the said upright-position switch is linked to another terminal (18) of the electrical power supply means by means of an end-of-travel switch (9) when the backrest is in the folded-down position, this end-of-travel switch being open when the seat part of the seat is forwards in its end-of-travel position, and closed when the seat part of the seat is not in the said end-of-travel position.

8. Device according to either one of Claims 6 and 7, in which the backrest (3) of the seat is mounted so as to rotate about a rotation spindle (3₁), the device including a rotary cam (20) which is secured to the backrest (3) and which has a circular arc-shaped profile (20₁) centred on the said rotation spindle and extending over a certain angle (α), the upright-position switch (8) including an operating member (8₁) which is displaced elastically by the cam member (20) when the backrest is in its upright position, and which then finds itself in contact with the circular arc-shaped profile (20₁) of this cam member, the angle (α) over which the circular arc-shaped profile (20₁) extends being sufficient to allow a certain range for angular adjustment of the upright position of the backrest and for the member (8₁) for operating the upright-position switch to be in contact with the said circular arc-shaped profile in the upright position of the backrest throughout this adjustment range.

9. Device according to any one of the preceding claims, equipping a two- or three-door vehicle front seat.

## Patentansprüche

1. Vorrichtung zum Längspositionieren eines Fahrzeugsitzes (1), wobei der Sitz eine Sitzfläche (2), die nach vorne und nach hinten in einer sogenannten Längsrichtung (L) verschiebebeweglich montiert ist, und eine Lehne aufweist, die an der Sitzfläche montiert ist und zwischen einer nach vorne umgeklappten Position und einer aufgerichteten Position, in der ein Benutzer sich auf den Sitz setzen kann, schwenken kann, wobei die Positioniervorrichtung aufweist:
- Einstellvorrichtungen (4, 5), um die Sitzfläche (2) in Längsrichtung bis in eine gewählte Position zu verschieben,
- und automatische Verschiebeeinrichtungen (6, 7, 8, 9, 10), um automatisch die Sitzfläche (2) nach vorne bis in eine sogenannte Endlagenposition zu verschieben, wenn die Lehne (3) umgeklappt wird, und um automatisch die Sitzfläche nach hinten bis in die oben genannte gewählte Position zu verschieben wenn die Lehne aus ihrer umgeklappten Position in ihre aufgerichtete Position zurückgeführt wird,
wobei die Vorrichtung dadurch gekennzeichnet ist, daß die automatischen Verschiebeeinrichtungen überdies einen in Bezug auf die Grundplatte in Längsrichtung verschiebebeweglichen Läufer (11), Einrichtungen (12) zur Erfassung einer vorbestimmten, Verriegelungsposition genannten Relativposition des Läufers in Bezug auf die Sitzfläche, Verriegelungseinrichtungen (13, 14), um den Läufer in Bezug auf die Sitzfläche fest zu verbinden, wenn der Läufer und die Sitzfläche in ihrer Verriegelungsrelativposition sind, Einrichtungen (10) zum Stoppen des Betriebes der automatischen Verschiebeeinrichtungen in dem Fall, in dem sie die Sitzfläche nach hinten verschieben und in dem die oben genannte Verriegelungsposition durch die Erfassungseinrichtrnngen (12) erfaßt wird, und Einrichtungen (15) zum gleichzeitigen Aufheben der Wirkung der Verriegelungseinrichtungen (13, 14) und der Stoppeinrichtungen (10) aufweist, wenn die Lehne (3) sich in ihrer umgeklappten Position befindet.

2. Vorrichtung nach Anspruch 1, in der die Verriegelungseinrichtungen (13, 14) einen Anschlag (13), der fest mit der Sitzfläche (2) verbunden ist, und eine Verriegelungseinheit (14) aufweisen, die an der Sitzfläche zwischen einer Eingriffsposition und einer Rückstellposition schwenkbar montiert ist, wobei die Verriegelungseinheit durch eine Feder (16) in Richtung ihrer Eingriffsposition beaufschlagt ist und in ihre Rückstellposition durch die Aufhebungseinrichtungen (15) bewegt werden kann, wenn die Lehne in ihrer umgeklappten Position angeordnet wird, wobei die Verriegelungseinheit eine nach vorne gerichtete Stoppfläche (14₁) aufweist, wobei der Läufer (11) zwischen dem Anschlag (13) und der genannten Stoppfläche eingeschlossen ist, wenn sich der Läufer und die Sitzfläche in ihrer Verriegelungsrelativposition befinden, wobei der Läufer (11) bzw. die Verriegelungseinheit (14) Oberflächen (11₁, 14₂) aufweisen, die geeignet sind, gemeinsam zusammenzuwirken, um während der automatischen Verschiebung der Sitzfläche nach hinten die Verriegelungseinheit (14) durch Nockenwirkung zu ihrer Rückstellposition zu bewegen, ohne den Läufer (11) zu bewegen, so daß die Sitzfläche und der Läufer in die Verriegelungsposition in Bezug auf den Läufer zurückkommen können.

3. Vorrichtung nach Anspruch 2, dadurch gekennzeichnet, daß der Läufer mit einer Reibung bewegbar ist, die ausreicht, um die Verschiebung des Läufers während der obengenannten Nockenwirkung zu verhindern.

4. Vorrichtung nach einem der Ansprüche 2 oder 3, in der die Aufhebungseinrichtungen (15) ein Kabel aufweisen, das zwischen der Verriegelungseinheit (14) und der Lehne (3) des Sitzes montiert ist, und das unter Spannung gesetzt wird, wenn die Lehne in ihrer umgeklappten Position ist, um die Verriegelungseinheit in ihre Rückstellposition schwenken zu lassen.

5. Vorrichtung nach einem der Ansprüche 2 bis 4, in der die automatischen Verschiebeeinrichtungen (6-10) einen Elektromotor zum automatischen Verschieben (7) aufweisen, und in der die Stoppeinrichtungen durch einen Stoppschalter (10) gebildet werden, der in Serie mit dem Elektromotor montiert ist, wobei die Erfassungseinrichtungen einen Erfassungshebel (12) aufweisen, der den Stoppschalter (10) steuert und der schwenkbar an der Verriegelungseinheit (14) montiert ist, wobei der Erfassungshebel zwischen einer Ruheposition, in der der Stoppschalter die Versorgung des Elektromotors (7) zur automatischen Verschiebung ermöglicht, und einer Erfassungsposition beweglich ist, in der der Stoppschalter die Versorgung des Elektromotors zur automatischen Verschiebung unterbricht, wobei der Erfassungshebel elastisch in Richtung seiner Ruheposition beaufschlagt ist, wobei der Erfassungshebel in seine Erfassungsposition durch den Läufer (11) bewegt werden kann, wenn der Läufer und die Sitzfläche in ihrer Verriegelungsrelativposition sind und die Verriegelungseinheit (14) in ihrer Rückstellposition ist, und wobei der Erfassungshebel (12) nicht mehr in Berührung mit dem Läufer (11) steht, wenn die Verriegelungseinheit (14) in ihrer Rückstellposition ist, so daß der Erfassungshebel dann in seiner Ruheposition ist.

6. Vorrichtung nach Anspruch 5, in der die automatischen Verschiebungseinrichtungen einen Schalter der umgeklappten Position (6) und einen Schalter der aufgerichteten Position (8) aufweisen, wobei der Elektromotor (7) zum automatischen Verschieben und der Stoppschalter (10) in Serie zwischen dem Schalter der umgeklappten Position und dem Schalter der aufgerichteten Position angeschlossen sind, und die Schalter der umgeklappten Position und der aufgerichteten Position mit der Lehne (3) des Sitzes zusammenwirken, um den Elektromotor (7) zum automatischen Verschieben an elektrische Versorgungseinrichtungen (17, 18) anzuschließen, wobei die Drehrichtung des Motors je nach dem, ob die Lehne in ihrer umgeklappten Position oder in ihrer aufgerichteten Position ist, umgekehrt wird.

7. Vorrichtung nach Anspruch 6, in der der Schalter der aufgerichteten Position (8) direkt mit einem Anschluß (17) der elektrischen Versorgungseinrichtungen verbunden ist, wenn die Lehne in aufgerichteter Position ist, und der Schalter der umgeklappten Position mit einem anderen Anschluß (18) der elektrischen Versorgungseinrichtungen mittels eines Endlagenschalters (9) verbunden ist, wenn die Lehne in umgeklappter Position ist, wobei der Endlagenschalter offen ist, wenn die Sitzfläche des Sitzes in ihre Endlagenposition vorgeschoben und geschlossen ist, wenn die Sitzfläche des Sitzes sich nicht in der Endlagenposition befindet.

8. Vorrichtung nach einem der Ansprüche 6 oder 7, in der die Lehne (3) des Sitzes schwenkbar um eine Drehachse (3₁) montiert ist, wobei die Vorrichtung einen Drehnocken (20) aufweist, der fest mit der Lehne (3) verbunden ist und der einen kreisbogenförmigen Umriß (20₁) aufweist, der auf die Drehachse zentriert ist und sich über einen bestimmten Winkel (α) erstreckt, wobei der Schalter der aufgerichteten Position (8) eine Steuereinrichtung (8₁) aufweist, die elastisch durch die Nockeneinheit (20) bewegt wird, wenn sich die Lehne in ihrer aufgerichteten Position befindet, und die sich dann in Berührung mit dem kreisbogenförmigen Umriß (20₁) dieser Nockeneinheit befindet, wobei der Winkel (α), über den sich der kreisbogenförmige Umriß (20₁) erstreckt, ausreicht, um einen gewissen Bereich zur Winkeleinstellung der aufgerichteten Position der Lehne zu ermöglichen und damit sich die Steuereinrichtung (8₁) des Schalters der aufgerichteten Position in der aufgerichteten Position der Lehne in dem gesamten Einstellbereich in Berührung mit dem kreisbogenförmigen Umriß befindet.

9. Vorrichtung nach einem der vorhergehenden Ansprüche, die einen Vordersitz eines Fahrzeugs mit zwei oder drei Türen ausrüstet.
